(19) **Europäisches Patentamt**
**European Patent Office**
**Office européen des brevets**

(11) **EP 4 357 952 A1**

(12) **EUROPEAN PATENT APPLICATION**

(43) Date of publication:
**24.04.2024 Bulletin 2024/17**

(21) Application number: **23203635.0**

(22) Date of filing: **13.10.2023**

(51) International Patent Classification (IPC):
$G06F\ 21/55^{(2013.01)}$    $H04L\ 9/40^{(2022.01)}$
$H04W\ 12/12^{(2021.01)}$    $G06N\ 3/02^{(2006.01)}$
$G06N\ 3/04^{(2023.01)}$    $G06N\ 3/08^{(2023.01)}$

(52) Cooperative Patent Classification (CPC):
**H04L 63/14; G06F 21/55; H04W 12/12;** G06N 3/02;
G06N 3/04; G06N 3/08; G06N 20/00

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **18.10.2022 US 202263417204 P**

(71) Applicant: **BlackBerry Limited
Waterloo, Ontario N2K 0A7 (CA)**

(72) Inventors:
• **SONG, Zhizhou
Kingston (CA)**
• **DING, Honghui
Kingston (CA)**
• **TIAN, Yuan
Kingston (CA)**
• **LI, Li Tao
Toronto (CA)**
• **OU, Weihan
Vancouver (CA)**

(74) Representative: **Novagraaf International SA
Chemin de l'Echo 3
1213 Onex, Geneva (CH)**

(54) **METHOD AND APPARATUS FOR CLONE SEARCH**

(57) There is provided a method and apparatus for identifying malicious code. The method uses machine learning to compare a new code segment to known code segments of malicious code. Code segments are converted to vectors and the cosine similarity of two vectors is used to identify clones. Techniques to train a neural network for handling very long code sequences and obfuscated malicious code are used.

EP 4 357 952 A1

Description

FIELD OF THE DISCLOSURE

The present disclosure relates to a method for searching for code clones. More specifically, the present disclosure relates to a method for searching for code clones in which the code has been obfuscated.

BACKGROUND

The background description includes information that may be useful in understanding the present inventive subject matter. It is not an admission that any of the information provided herein is prior art or applicant admitted prior art, or relevant to the presently claimed inventive subject matter, or that any publication specifically or implicitly referenced is prior art or applicant admitted prior art.

Software engineering widely adopts open-source projects and typically relies on public package management systems. However, such code may comprise malicious code, especially when the validity and integrity of the code is not verified. Even for popular repositories that are security-critical, e.g., operating system or database repositories, their pull requests (PRs) are not constantly reviewed due to the complexity of PRs and the credibility of contributors. As a result, one can sneak in malicious code through a simple pull request.

Additionally, most software project management sites have free continuous-integration and continuous deployment (CI/CD) tools that can also be abused. For example, GitHub Actions, a free CI/CD tool, has been abused by attackers for cryptocurrency mining via commits and forks, that has caused a significant loss of computing resources. In addition, recent attacks against the npm package repository affected 13 million USD in cryptocurrency. Copy-and-paste code snippets from the Internet, another widely uncontrollable practice in software development, further escalates the situation.

However, the malicious code in these attacks is hard to detect due to several factors, and the most important one is that the malicious code is injected into a large trunk of benign code, and such code can be further obfuscated to obscure its context meanings.

Obfuscation techniques are widely used to protect authorship and reverse engineering. On the other hand, obfuscated code makes it more difficult for security engineers to find intellectual property infringement and detect malicious code mixed into benign code.

There are many types of obfuscation techniques. Some of them, like variables renaming, string splitting, or spacing, have a low impact on the code structure. Others, such as array rotation, wrapping, control flow flattening, or dead code injection, can have a significant impact on code structure. For some dynamic typing languages or script languages, obfuscation can even reform node properties, like interchanging strings and hexadecimal numbers.

JavaScript is a dynamic typing, interpreted programming language. Its flexible syntax boosts the speed of development and adaptation to new requirements so that it is widely used across all browsers. Over time, millions of JavaScript libraries have been developed and uploaded for free usage. In practice, JavaScript code is often obfuscated by software developers and threat actors into a more obscure form concealing its purpose by replacing meaningful functions and variable identifiers with random-looking strings.

As shown below, a simple JavaScript code snippet for uploading an email and password is obfuscated to a rather complicated one. While these two code snippets perform the same function, they look entirely different from each other and the obfuscated code is not easily recognized as a clone of the original code.

```
$.ajax({

    url: "SomeUrl",

    type: "POST",

    dataType: "html",

    data: {                              (Original Code)

        Email: email,

        password: password

    }

})
```

function _0x25ae(){var _0x2621 bd=['type'];_0x25ae= function(){return _0x2621bd;};return _0x25ae();}function _0x4692(_0x76ca2,_0x2282c2){var _0x497e69=_0x25ae(); _0x4692=function(_0x1314ca,_0x1b5458){_0x1314ca=_0x1314ca-(-0x833+0x640*0x3+0xa8d*-0x1);var _0x447be9=_0x497e69[_0x1314ca]; return _0x447be9;};return _0x4692(_0x76ca2,_0x2282c2);}var _0x129cf1={};_0x129cf1['leXvl']='POST'; (Obfuscated _0x129cf1['VRLpV']='html';var _0x3f2652= Code) _0x129cf1 ;var _0x5b51 c8={};_0x5b51c8['Email']= _0x36d406;_0x5b51c8['password']=_0x48adef;var _0x34c9c9={};_0x34c9c9['url']='SomeUrl'; _0x34c9c9[_0x4692(0x0)]=_0x3f2652['leXvl'];_0x34c9c9 ['dataType']=_0x3f2652['VRLpV']; _0x34c9c9['data']=_0x5b51c8;$['ajax'](_0x34c9c9);

There are a variety of existing tools can be leveraged for code clone search. Such tools are described in, for example, S. H. Ding, B. C. Fung, and P. Charland, Kam1n0: Mapreduce-based assembly clone search for reverse engineering, Proceedings of the 22nd ACM SIGKDD International Conference on Knowledge Discovery and Data Mining, pages 461-470, 2016; S. H. Ding, B. C. Fung, and P. Charland, Asm2vec: Boosting static representation robustness for binary clone search against code obfuscation and compiler optimization, 2019 IEEE Symposium on Security and Privacy (SP), pages 472-489, IEEE, 2019; L. Jiang, G. Misherghi, Z. Su, and S. Glondu. Deckard: Scalable and accurate tree-based detection of code clones, 29th International Conference on Software Engineering (ICSE'07), pages 96-105, IEEE, 2007; S. Ndichu, S. Kim, S. Ozawa, T. Misu, and K. Makishima, A machine learning approach to detection of javascript-based attacks using ast features and paragraph vectors, Applied Soft Computing, 84:105721, 2019; H. Sajnani, V. Saini, J. Svajlenko, C. K. Roy, and C. V. Lopes, Sourcerercc: Scaling code clone detection to big-code, Proceedings of the 38th International Conference on Software Engineering, pages 1157-1168, 2016, incorporated herein by reference.

These tools utilize different types of techniques such as fingerprinting or hashing, token-based comparison, tree-based comparison, and hex differing to capture the syntactic or semantic similarity between two code snippets. However, most clone pairs are syntactically different and scattered among a long sequence of code.

In addition, there are also studies focusing on inventing obfuscation techniques that can breach existing clone search tools, such as A. Pass, M. Backes, and B. Stock. Hidenoseek: Camouflaging malicious javascript in benign asts. Proceedings of the 2019 ACM SIGSAC Conference on Computer and Communications Security, pages 1899-1913, 2019; A. Kulkarni and R. Metta, A code obfuscation framework using code clones, Proceedings of the 22nd International Conference on Program Comprehension, pages 295-299, 2014; A. Kulkarni and R. Metta, A new code obfuscation scheme for software protection, 2014 IEEE 8th International Symposium on Service Oriented System Engineering, pages 409-414. IEEE, 2014; T. Laszlo and A . Kiss, Obfuscating c++ programs via control flow flattening, Annales Universitatis Scientarum Budapestinensis de RolandoEotvos Nominatae, Sectio Computatorica, 30(1):3-19, 2009, incorporated herein by reference.

In summary, existing solutions cannot mitigate the syntactic variations against code obfuscation and identify the semantic connections between the original code and the obfuscated one.

## SUMMARY

According to at least one embodiment of the present disclosure, there is provided a method at a computing device for identifying malicious software, comprising a) encoding a first software file using an encoder model to create a first encoded vector; b) selecting a malware file from a database of malware files; c) encoding the malware file using the encoder model to create a second encoded vector; d) computing a cosine similarity between the first encoded vector and the second encoded vector; and e) determining whether the first software file is a clone of the malware file based on the cosine similarity.

According to at least another embodiment of the present disclosure, there is provided a computing device for identifying malicious software, comprising: a processor; and memory; wherein the processor and the memory cooperate to: a) encode a first software file using an encoder model to create a first encoded vector; b) select a malware file from a database of malware files; c) encode the malware file using the encoder model to create a second encoded vector; d) compute a cosine similarity between the first encoded vector and the second encoded vector; and e) determine whether the first software file is a clone of the malware file based on the cosine similarity.

According to yet another embodiment of the present disclosure, there is provided a computer readable medium having stored thereon executable code for execution by a processor of a computing device, the executable code comprising instructions for: a) encoding a first software file using an encoder model to create a first encoded vector; b) selecting a malware file from a database of malware files; c) encoding the malware file using the encoder model to create a second encoded vector; d) computing a cosine similarity between the first encoded vector and the second encoded vector; and e) determining whether the first software file is a clone of the malware file based on the cosine similarity.

## BRIEF DESCRIPTION OF THE DRAWINGS

The present disclosure will be better understood having regard to the drawings in which:

**Figure 1** is a flow diagram of a method according to at least one embodiment of the present disclosure.

**Figure 2** is a flow diagram for transforming code snippets into vectors according to at least one embodiment of the present disclosure.

**Figure 3** is a flow diagram for abstracting a code segment into a shorter code segment according to at least one embodiment of the present disclosure.

**Figure 4** is a graphical representation of probabilities for each token as calculated during the abstraction process, according to at least one embodiment of the present disclosure.

**Figure 5** is a flow diagram illustrating a method of training the abstraction layer, according to at least one embodiment of the present disclosure.

**Figure 6** is a flow diagram illustrating a method of refining the abstraction model, according to at least one embodiment of the present disclosure.

**Figure 7** is a flow diagram illustrating a method of encoding code segments into vectors according to at least one embodiment of the present disclosure.

**Figure 8** is a flow diagram illustrating a method of training the encoder model according to at least one embodiment of the present disclosure.

**Figure 9** is a flow diagram of a process for identifying malicious code files according to at least one embodiment of the present disclosure.

**Figure 10** is a block diagram of a computing device for performing the methods disclosed herein.

## DETAILED DESCRIPTION OF THE DRAWINGS

The present disclosure is directed to a method for identifying clone code snippets. Clone code snippets are code snippets which have the same functionality, although they may look different from each other. This method is useful in identifying malicious code which has been obfuscated based on a known piece of malicious code.

For example, a malicious actor may wish to introduce malicious code into a piece of software. To the extent that the malicious code to be introduced is known and found in various malicious code databases, such malicious code could be easily identified and removed. However, by obfuscating the malicious code, the malicious actor may disguise the malicious code so that it is not recognized by traditional techniques.

The present disclosure provides methods to recognize obfuscated code, thereby facilitating recognition of malicious obfuscated code inserted into software. While the present disclosure will discuss such methods with reference to the JavaScript™, other programming languages are within the scope of the present disclosure.

In particular, the present disclosure aims to address three main problems for clone search.

**Extremely Long Sequence:** Either the source or the target of a code clone pair can be much longer than any typical neural sequence learning-based method can handle. With commonly available current hardware and model sizes, models such as Long Short Term Memory (LSTM) and Transformers typically limit the input sequence to 512 tokens.

**Code Mixing:** The malicious actor mixed the malicious seed code into a larger fragment of benign code or dead code. In these cases, the learning model needs to correlate two scripts and find common semantics in order to identify clones.

**Code Obfuscation:** After mixing, the code is typically packed or obfuscated, resulting in two pieces of code in a clone pair that provides very limited literal information for matching.

To address these challenges, there is provided a similarity learning-based model for efficient and effective clone search, which provides a robust solution against code-mixing and code obfuscation. Specifically, the present solution involves a code selection and abstraction layer for similarity learning. The code selection and abstraction layer, combined with a sequential encoder, is able to handle extremely long obfuscated code sequences.

Specifically, there is provided a code selection and abstraction layer for similarity learning. Combined with a sequential encoder, it is able to handle extremely long obfuscated code sequences. The code selection and abstraction process itself is not differentiable. Instead of using a typical gradient decent optimizer, the selection and abstraction process is used as a policy function that returns a feasible solution given the observed code. A reward function is used to train the policy function.

Therefore, the present disclosure aims to provide a method for identifying semantic clones for a given code snippet effectively from a large codebase. The present method is robust and capable of use in situations where the input snippet can be extremely long, the seed code is mixed with other code in the target snippet, and the seed scripts and the files in the search pool are obfuscated.

Specifically, there is provided a code selection and abstraction layer for similarity learning. Combined with a sequential encoder, it is able to handle extremely long obfuscated code sequences.

**Existing Solutions**

Generally, there are four recognized categories of clones:

- Type 1: code fragments are syntactically identical except for spaces and tabs.

- Type 2: in addition to Type 1 clone differences, identifier or function names are modified.

- Type 3: in addition to Type 2 clone differences, syntactically similar code fragments differ at the statement level. Some common examples are if statements changed to switch statements or for loops changed to while loops. However, the code fragments are still similar in terms of structure or Abstract Syntax Tree (AST). Type 3 clones may be further subdivided based on level of similarity.

- Type 4: usually completely dissimilar in syntax or even AST, but the code pairs have the same semantics.

Most existing clone search techniques focus on Type 3 clones where 70-90% of the tokens are similar to the original code. A few methods, such as in S. Ndichu, S. Kim, S. Ozawa, T. Misu, and K. Makishima. A machine learning approach to detection of javascript-based attacks using ast features and paragraph vectors, Applied Soft Computing, 84:105721, 2019, incorporated herein by reference, can accommodate all levels of code clones.

Clone search researches propose different techniques focusing on different granularity of code files, that are token-based, tree based (AST), data flow or control flow based, amongst others. A variety of techniques have been proposed, like hashing, indexing, vector representation, machine learning, or hybrid methods.

Most prior art clone search methods assume that entire code fragments are the clone of another, which is not applicable to some scenarios described above where the malicious seed is obfuscated into benign code. Besides, most clone search tools are designed for programming languages like C, C++ and Java, where the code files are easier to be broken into code fragments by functions, which is not realizable for script languages like JavaScript.

There are only a few studies focused on JavaScript code clones. For example, P. Likarish, E. Jung, and I. Jo. Obfuscated malicious javascript detection using classification techniques, 2009 4th International Conference on Malicious and Unwanted Software (MAL WARE), pages 47-54. IEEE, 2009, and Ndichu et al., also work on an obfuscated malicious JavaScript dataset, but their experiments are about malicious file classification instead of clone search. They also use classic machine learning approaches like SVM and Doc2Vec.

**Obfuscation Methods**

Renaming is a common technique to rename the variables or methods in order to disguise the semantic meaning of the targets. Value transformation replaces the literals and numbers with hexadecimals.

Object key transformation is a special obfuscation for JavaScript involving renaming the keys in a JavaScript Object such that later reference to the object elements will use the renamed ones.

String splitting and rotation splits strings into different trunks, places the literals in an array, and further rotates the array.

Dead code injection injects a piece of non-functional code into the original JavaScript script.

Control flow flattening is a strong mean of obfuscation that increases the complexity of the original code by 5-fold. The flattening algorithm first breaks a code segment into different blocks. Then, these blocks are organized at the same level. For example, variable declarations are placed at the beginning and nested blocks are placed with the parent blocks. Each flattened block is regularized by a new state such that the order of execution of each block is controlled by these states. Furthermore, these regularized blocks are fitted into a pre-defined structure like a switch state, an if-else chain, or the like. Control flow flattening can greatly alter the structure of the original code such that the size of ASTs can grow between 150% to 300%.

**Levels of Obfuscation**

In literature, there is no widely accepted numeric scale for code obfuscation. C. Collberg, C. Thomborson, and D. Low, A taxonomy of obfuscating transformations, Technical report, Citeseer, 1997, incorporated herein by reference, defines three criteria to measure obfuscation, namely potency, resilience and cost.

Potency is a basic criterion for most obfuscations, and there is a trade-off between resilience and cost. More resilient obfuscations mostly have higher costs, like control flow flattening.

Following the approach defined by Deckard, the Levenshtein edit distance between the tokens and ASTs of two files denoted by $\|C - \tilde{C}\|_{ed}$ and $\|T - \tilde{T}\|_{ed}$ is calculated. The complexity level of an obfuscated file can be defined by the following two metrics:

$$\mathcal{O}(C) = \frac{\|C - \tilde{C}\|_{ed}}{|C|} \qquad \text{(Equation 1)}$$

$$\mathcal{O}(T) = \frac{\|T - \tilde{T}\|_{ed}}{|T|}$$

where $\mathcal{O}(x) \in [0; 1 + \frac{|\tilde{x}|}{|x|}]$ and x is the tokens or AST of the input file. The complexity value indicates how many steps are required to update one set of tokens or AST to another in percentage of the number of tokens or nodes for the code fragment. To instantiate, if $\mathcal{O}(C) = 0.9$, it means 10% of the tokens persist in the obfuscated file (with same order). If $\mathcal{O}(T) = 1.2$, it means all of the nodes in the original AST are required to be updated or removed and another 20% of nodes are added.

**Neural Sequence Learning Model**

Neural sequence models are the neural networks for modeling sequential data, such as a sentence. Typical sequence models such as recurrent neural networks (RNNs)-based models have achieved great success in many natural language processing (NLP) applications as they can learn a distributed vector representation of text, e.g., a sentence. Sequence-to-sequence (Seq2seq) models are another type of sequence model that take sequential data as input and generate sequential data as output, and is widely used in tasks like machine translation, text summarization, and text generation. Besides being applied on text, sequence models have also been applied to model source code.

RNN-based models have several drawbacks. First, the predicted output has fixed length. Second, the models are trained only on the distribution of training data, which is named as exposure bias. Third, the loss function does not conform to the benchmark metric like BLEU. Also, such metrics are not continuous, thus, not differentiable. Fourth, if the sequential data is long, the RNN model is often hard to converge since distant units can easily been forgotten as the chain of hidden stats gets longer.

Recently, reinforcement learning concepts have been brought to NLP research as the language modeling for text generation can be considered a Markov decision process to pick lexical tokens, which may be optimized by policy gradient methods.

**Problem Definition**

The present disclosure aims to provide a method for identifying semantic clones for a given code snippet (i.e., seed script) effectively from a large codebase. The solution described herein is robust and capable of use in situations where the input snippet can be extremely long, the seed code is mixed with other code in the target snippet, and the seed scripts and the files in the search pool are possibly obfuscated.

As most prior art methods assume that clone pairs have the same semantics, four new obfuscation methods are considered:

- M1: The seed file has been injected into the base file without any modification such that $C_{dest} = C_{seed} \oplus C_{base}$;

- M2: The destination file is an obfuscated version of the seed file such that $C_{dest} = \tilde{C}_{seed}$;

- M3: The obfuscated seed file has been injected into the base file such that $C_{dest} = \tilde{C}_{seed} \oplus C_{base}$;

- M4: The seed file has been injected into the base file and the whole crafted file has been obfuscated as the destination file such that $C_{dest} = f_{obs}(C_{seed} \oplus C_{base})$, and in some cases, the crafted file can be mixed with dead code that has no functionality, such that $C_{dest} = f_{obs}(C_{seed} \oplus C_{base}) \oplus C_{dead}$.

In the above, the $\oplus$ operator is used to indicate not only concatenation or injection, but also scattering of the seed file in the destination file.

For M1, a simple text search is sufficient to identify clones. Most prior art methods have focused on M2 and M3 with Type 2 and Type 3 clone seeds, such as in Deckard which segments the code file into functions or small pieces. However, M3 and M4 are the most common use cases.

As it is not ideal to divide a script file into segments of functions, the present disclosure provides solution for M4 with Type 3 and Type 4 clones as it will also cover all other scenarios under consideration. Although M4 with dead code is not a general case in the real-world, it is used to show that long sequences can be handled.

Generally, a code snippet C can be written as a sequence of ordered lexical tokens, such that C = {$x_0, x_1, \ldots, x_n$} for $x_t \in \Gamma$, where $\Gamma$ is a set of all tokens for a programming language.

A snippet C can be obfuscated by an obfuscation function $f_{obf}$, such that C' = $f_{obs}(C)$, where C' represents an obfuscated version of C. C and C' function semantically the same, but with a different set of tokens, such that $\|C'-C\| > 0$.

A clone search function is defined as:

$$f_{cs}(C_{seed}, C_{dest}) = \delta\Big(\phi(C_{seed}), \phi\big(\pi(C_{dest})\big)\Big) \qquad \text{(Equation 2)}$$

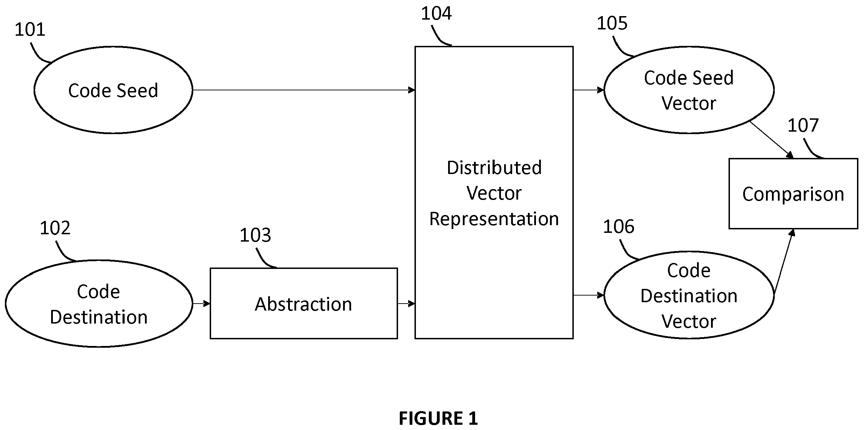

Where $C_{seed}$ represents a known code snippet and $C_{dest}$ is unknown, $\delta$ represents a comparison function that takes in as input vector representations of the code snippets, $\phi$ is a function that transforms a code snippet into a vector representation, and $\pi$ is a function that abstracts the functionality of a large code snippet. This equation is illustrated with respect to **Figure 1.**

As shown in **Figure 1,** code seed **101** is transformed in a vector representation at block **104,** to produce code seed vector **105.** Code destination **102** is first abstracted at block **103,** and then transformed in a vector representation at block **104,** to produce code destination vector **106.** Code seed vector **105** and code destination vector **106** are then compared at block **107.**

The output of the comparison at block **107** is binary. Specifically, the output of the comparison is 1 if and only if $C_{dest}$ has a subset of tokens [$x_m; x_{m+1}, \ldots x_{m+k}$] that is semantically identical with $C_{seed}$. Otherwise, the output of the comparison is 0.

## Main Structure

To address the above issues, there is provided a neural network model to encode the input sequence into a fixed length characteristic vector and compare the vectors generated from seed and destination files. Furthermore, the model uses a reinforcement learning approach to abstract tokens from long sequence destination data to be compared with the seed file. In brief, the encoder model reduces the sequence of input tokens $[x_0; x_1; ... x_n]$ into a vector representation $\vec{v} = [v_0; v_1; ... v_m]$. Then, the model calculates the cosine similarity between $\vec{v}_{seed}$ and $\vec{v}_{dest}$ as an evaluation score for clone search. Additionally, if the sequence is too long, we use abstraction, which is a reinforcement learning approach to select tokens that can represent the general semantics of the whole sequence such that we can further shorten the input length.

The general architecture is a Siamese model that generates the semantic similarity score of input pairs. The abstraction process takes embedded vector as inputs, generates the probability as the policy, selects tokens based on the policy, and outputs the concatenated sequence. The final reward is achieved by the similarity score and the loss is conditioned under reward and joint probabilities.

The abstraction process is designed to address the problems of long sequences and code mixing. The abstraction disentangling regularization further mitigates problems due to long sequences. Finally, the sequence encoder uses a deep neural network to de-obfuscate the inputs.

## Input Preprocessing and Embedding

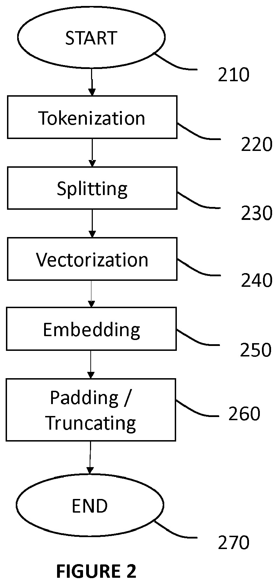

Reference is now made to **Figure 2,** which illustrates the process for transforming a code snippet into a vector representation. The process starts at block **210** and proceeds to block **220** in which the code snippet is tokenized.

Tokenization removes irrelevant elements from the code and splits the code into separate tokens. The tokenizer traverses through the entire code snippet and preserves all keywords, literals, and variables and removes noise like comments. For example, the following code snippet:

$.ajax({"url":"SomeUrl",}) //ajax call would be transformed, after tokenization, into the following:

$ . ajax ( { url : SomeUrl , } )

The process then moves on to block **230** in which the tokenized code snippet is split into separate tokens.

The process then moves to block **240** for the vectorization step in which the tokens are mapped to a numerical value. For example, the above code snippet could be mapped to:

1234567-1854 Where "$" is mapped to 1, "." Is mapped to 2, "ajax" is mapped to 3, "(" and ")" are mapped to 4, "{" and "}" are mapped to 5, "url" is mapped to 6, ":" is mapped to 7, "SomeUrl" is mapped to -1, and "," is mapped to 8.

Vectorization may utilize a dictionary which contains the mapping for keywords and other commonly used words. Words for which the dictionary contains no entry are mapped to -1, as in the case of "SomeUrl" above.

The process then proceeds to block **250** for embedding, where the numerical values are mapped to vectors. For example, the above code snippet would be transformed, during the embedding step, into the following, where each numerical value is mapped to a corresponding vector.

$V_1\ V_2\ V_3\ V_4\ V_5\ V_6\ V_7\ V_{-1}\ V_8\ V_5\ V_4$

The embedding step **250** is performed by an embedding layer, which is trained with a training data set prior to operation. During training, each corresponding vector is refined to indicate the semantic relationship between each word. For regular languages, the use of semantic relationships greatly improve performance. For example, in the JavaScript programming language, the token *var* is followed by a name token to indicate that a new variable is being instantiated.

According to at least one embodiment, the length of these numerical vectors is 6k, however, the present disclosure is not so limited. Therefore, after embedding, the vector is padded or truncated at block **260** to achieve the desired length. For the above example, the resulting vector would be as shown below:

$V_1\ V_2\ V_3\ V_4\ V_5\ V_6\ V_7\ V_{-1}\ V_8\ V_5\ V_4\ 0\ 0\ 0\ 0\ 0\ 0\ 0\ [...]\ 0$

The process then proceeds to block **270** and ends.

## Abstraction

Abstraction is a widely adopted design pattern for programming languages. When programmers write more and more duplicated code, they tend to abstract the repetitive patterns into a single base class or template. Recurrent Neural Networks (RNNs) may suffer from vanishing gradient for long sequence data, which leads to a poor performance to extract the context meaning from obfuscated content. According to at least one embodiment of the present disclosure, the following abstraction process is used to reduce the size of inputs.

Generally, the abstraction process traverses the entire code fragment and calculates the probability for each token if it can represent the semantics of latter sequence. Based on the probability, the entire code is truncated into different pieces. All pieces are then gathered together to generate a new abstraction.

Tunable parameters are used in the abstraction process. Specifically, when dividing a large code segment (as represented by a series of vectors, as discussed above), the abstraction process will produce a number of trunks (i.e., subsegments of the code segment), each having a predetermined length *len.* The number of trunks will be equal to a number of filters of the model, t. For example, a code segment having 1000 tokens may be abstracted into 10 trunks of length 20, which are then recombined into a code segment of length 200. Through experimentation, it has been found that the number of filters may be set to between 4 and 8, and the length may be set to 256 or 512, in order to achieve good results, depending on the length of the code segment being abstracted.

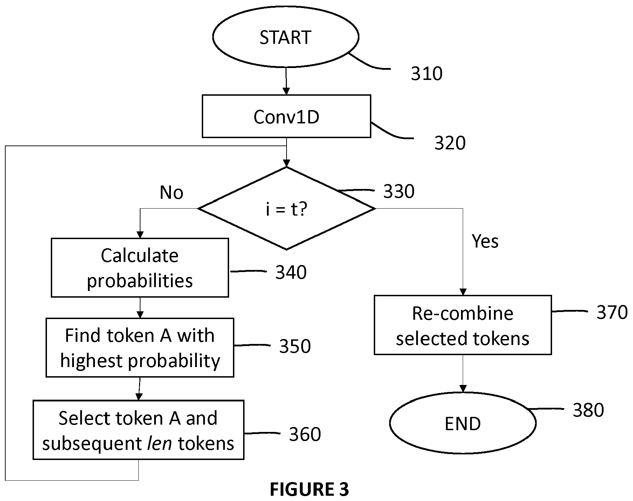

Such a process is illustrated with respect to **Figure 3.** Specifically, in **Figure 3,** the process starts at block **310** and proceeds to block **320,** in which a one-dimensional convolutional neural network is used to generate logits for each token in the text sequence. Notably, the input for this step are the embedded vectors such that the one-dimensional convolutional neural network can benefit from the spatial information embedded in the higher dimensions. This step generates a logit for each token of the original code segment.

The process then proceeds to block **330** to iterate *t* times. From block **330,** if the number of iterations is less than *t*, the process moves on to block **340,** where a probability is calculated for each token of the subsegment. According to at least one embodiment of the present disclosure, this step may be performed by the function *softmax.*

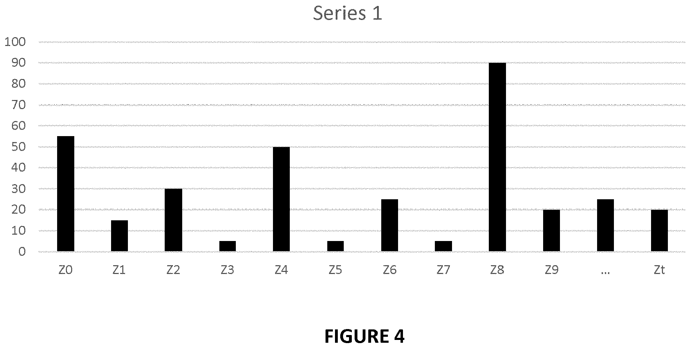

The output of block 340 is illustrated with respect to **Figure 4.** As seen in **Figure 4,** for each token z₀, ..., zt, there is a probability (i.e., a number between 0 and 1, or 0 and 100). In the example of **Figure 4,** the highest probability is found for vector $z_8$.

The process then proceeds to block **350,** where the token with the highest probability is selected. Specifically, at the i-th iteration, the token with the i-th highest probability is selected. A new trunk is then constructed at block **360,** starting with the token selected at step **350** followed by the *len* subsequent tokens. This produces a trunk of length *len* + 1.

The process then returns to block **330** for the next iteration. If all iterations have been performed, the process proceeds from block **340** to block **370,** where all trunks are combined. The process then proceeds to block **380** and ends.

Convolutional neural networks are scalable to the size of the data and each filter can be computed in parallel, thereby providing a solution to the long sequence problem.

The abstraction algorithm illustrated in **Figure** 3 may also be expressed as follows:

$$\textbf{Function } \pi_\theta(\text{C})$$

$$logits_t \leftarrow Conv1D(C)$$

$$\textbf{for } \text{i} = 1 \textbf{ to } t, \textbf{ do}$$

$$probs \leftarrow softmax(logits_i)$$

$$\boldsymbol{P}_i \leftarrow max\ (probs)$$

$$a \leftarrow argmax(probs)$$

$$T_i \leftarrow C[a: a + len]$$

$$\textbf{end for}$$

$$T \leftarrow \text{gather all } T_i$$

$$\text{return } T, \boldsymbol{P}_t$$

**Abstraction Policy Gradient**

The present disclosure provides for an encoder model using recurrent neural networks (RNNs) and the comparison of encoded vectors with cosine similarity. Moreover, clone search tools also need to search pairs efficiently. While the seed tokens can be randomly distributed among the destination tokens, it is not feasible to partition the script files into different pieces. So, the need arises to scan every trunk of the destination tokens, and predict the distribution of seed tokens.

This problem can be assimilated to a classic probability problem: assuming there is bag containing three balls, and that each ball can be either yellow or red. If a ball is selected one at a time, how many of them are red and how many of them are yellow? To answer this question, the maximum likelihood estimation (MLE), defined by equation 2 below, may be used:

$$\mathcal{L}(x) = \prod_{i=1}^{n} \pi\left(x_i\right) \qquad \text{(Equation 3)}$$

A single code segment is represented as a set of n ordered code pieces C = {$x_0$, $x_1$, ..., $x_n$}. In order to estimate a true probability distribution rr(C), according to at least one embodiment of the present disclosure, there is provided a parametric function approximation $\pi_\theta(C_{dest})$ to extract tokens from $C_{dest}$, where the parameters $\theta$ can best approximate the probability of the observed data. Therefore, $\theta$ should be over the same space with $C_{dest}$. The maximum likelihood is the product of $\pi_\theta(x)$ to represent the joint probability. However, in order to avoid numeric overflow or vanishing, which also makes it difficult for deep neural networks to converge, we use the sum of log probabilities. Also, maximizing log likelihood is equivalently minimizing cross entropy or KL divergence.

Assuming $C_{dest}$ is the crafted destination code piece, $C_{seed}$ is the seed tokens and T = {$t_1$,$t_2$, ..., $t_k$} is the abstracted tokens, we then have the following conditioned MLE:

$$\mathcal{L}_\theta = \prod_{i=1}^{k} log\, \pi_\theta\left(t_i \,|\, t_{i-1}, C_{seed}, \theta\right) \qquad \text{(Equation 4)}$$

The objective during training of a neural network is to maximize the rewards received from the neural network's computations. This may be achieved based on a loss function, where maximizing the rewards corresponds to minimizing the loss function. According to at least one embodiment of the present disclosure, the loss function and the derivative of the loss function are as follows:

$$\mathcal{L}_\theta = -\mathbb{E}_{t_1 \ldots t_k \sim \pi_\theta}\left[r(T)\right] \qquad \text{(Equation 5)}$$

$$\nabla\mathcal{L}_\theta = -\mathbb{E}_{t_1 \ldots t_k \sim \pi_\theta}\left[\nabla \log \pi_\theta(t_1, \ldots, t_k)\, r(T)\right]$$

where $\mathbb{E}$ represents the expected value, $t_i$ is the abstracted trunks and r(T) is a single reward received by comparing the abstracted tokens with the seed tokens.

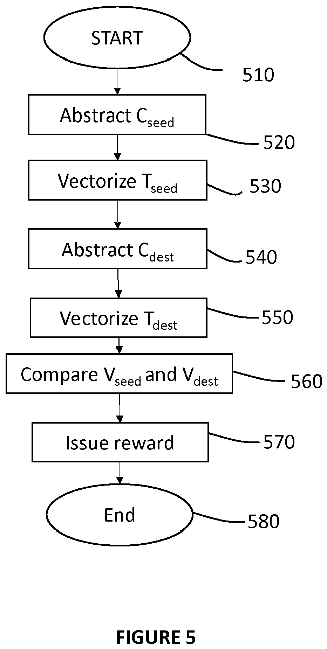

Reference is now made to **Figure 5,** which illustrates a training process for the abstraction model based on the above. The process of **Figure 5** may be performed until convergence - that is until the loss function is minimized, with a plurality of training data files.

For each set of training data files, there is a $C_{seed}$ and a $C_{dest}$, corresponding to the seed code segment and the destination code segment, respectively.

The process starts at block **510** and proceeds to block **520** where $C_{seed}$ is abstracted according to the process described above with respect to **Figure 3**. This produces abstracted code segment $T_{seed}$.

The process then proceeds to block **530** where $T_{seed}$ is vectorized to produce vector $V_{seed}$. This is performed based on an encoder which is already trained.

The process then proceeds to block **540** where $C_{dest}$ is abstracted using the process described above with respect to **Figure 3**. This produces abstracted code segment $T_{dest}$.

The process then proceeds to block **550** where $T_{dest}$ is vectorized to produce vector $V_{dest}$. This is performed based on an encoder which is already trained.

Then, at block **560**, $V_{seed}$ and $V_{dest}$ are compared using cosine similarity. As this is training data, it is known whether $C_{seed}$ and $C_{dest}$ are clones or not. If the process produced the right answer - that is if $V_{seed}$ and $V_{dest}$ are found to be a match when they are in fact a match, a reward is issued at block **570**. Otherwise, if the process produced the wrong answer, a penalty (i.e., a negative reward) is applied at block **570**.

The process then ends at block **580**.

This method of training the one-dimensional convolutional neural network is useful in that it can handle discrete sequences, whereas other deep learning models would fail to converge from discrete sequences.

Based on the reward, the maximum likelihood probability is calculated as the loss for the abstraction model. As the values are discrete, the expectation is the sum of the log probabilities multiplied by rewards.

In summary, the abstraction algorithm extracts tokens from an obfuscated destination file by the policy for each token. Then the training algorithm assigns rewards based on cosine similarity scores between the abstractions and seed tokens. Then, the policy is updated by equation 4.

**Abstraction Disentangling**

Since no greedy policy is used in the abstraction training method described above with respect to **Figure 5,** the abstraction model can be easily overfitted. For example, if there exists a common pattern for the obfuscated seed, all filters can be centralized to that pattern of code trunk. To further normalize the generated distributions, we use the Kullback-Leibler divergence to compare the probability for each filter. The Kullback-Leibler divergence is discussed in T. Van Erven and P. Harremos. Renyi divergence and kullback-leibler divergence, IEEE Transactions on Information Theory, 60(7):3797-3820, 2014, incorporated herein by reference.

This process ensures that the abstraction process selects code trunks that are distributed across the code segment. The following equation may be used:

$$ kl(p_1, p_2) = -\sum_{x \in X} p_1(x) \log \frac{p_1(x)}{p_2(x)} \qquad \text{(Equation 6)} $$

where $p_1$ and $p_2$ represent a statistical distribution for two filters, as computed in step **340** of **Figure 3.**

The negative Kullback-Leibler divergence is used in order to provide more balanced distributions of code trunks from a code segment, instead of having many code trunks selected from the same section of the code segment.

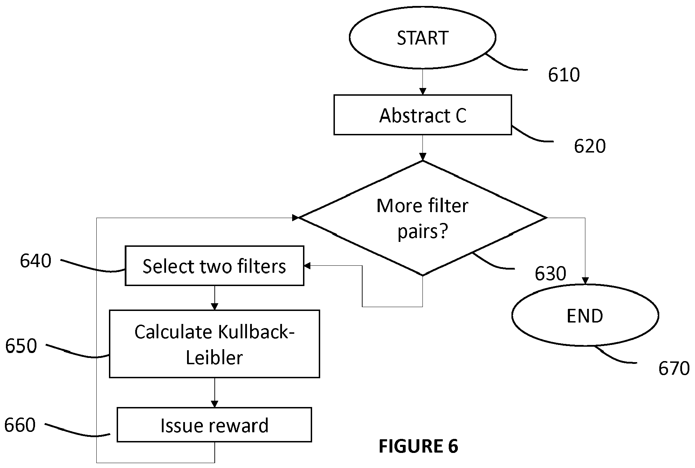

Therefore, according to at least some embodiments of the present disclosure, the abstraction model is further refined based on the method illustrated in **Figure 6.**

As seen in **Figure 6,** the process starts at block **610** and proceeds to block **620** where a code segment is abstracted using a trained abstraction model. According to at least some embodiments, the abstraction model is trained using the method of **Figure** 5. Moreover, according to at least some embodiments, the code segment is abstracted using the method illustrated in **Figure 3.**

The process then proceeds to block **630** where each non-identical pair of filters from the set of filters used in the abstraction model is iterated through. At block **640,** two non-identical filters from the abstraction model are selected. The process then proceeds to block **650** where the Kullback-Leibler divergence is calculated. According to at least some embodiments, this is performed according to **Equation 6,** above.

As seen with respect to **Figure 3,** step **340** involves the calculation of probabilities. These probability distributions are fed into **Equation 6** as $p_1$ and $p_2$, corresponding to each of the two selected filters.

The process then proceeds to block **660** where a reward is issued based on the Kullback-Leibler divergence. The reward may be based on a loss function, where a minimized loss is considered equivalent to a maximized reward.

The reward is then used to adjust the abstraction model to provide a more balanced distribution of code trunks from the code segment.

**Encoder**

The encoder serializes the code tokens into a fixed length feature vector with fewer dimension than the number of tokens or nodes of an Abstract Syntax Tree (AST). The encoder model of the present disclosure contains two or more RNN layers and one or more fully connected feed-forward layers. RNNs can carry forward previous context meanings into later states, which is beneficial for the model since the intent of the code is only expressive with the whole context and obfuscation can further alter the structure of the original code. Each hidden RNN layer is also bidirectional, that concatenates the forward and backward states for each timestamp. The RNN layers are replaced with the attention encoder as a baseline to be compared with. The last layer is a fully connected layer that maps the hidden states to the final vector.

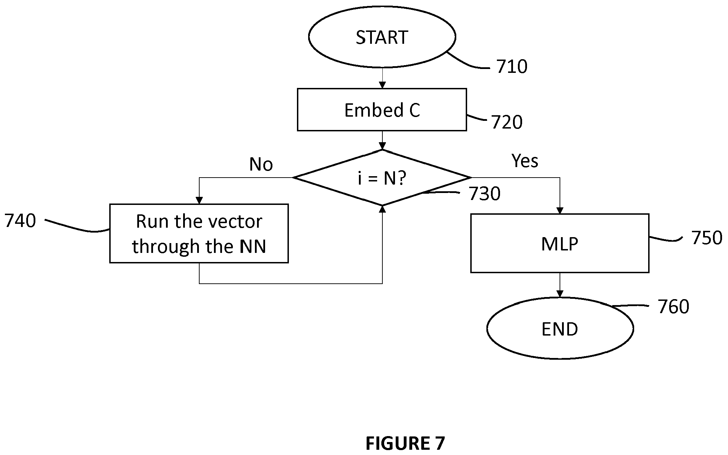

Reference is now made to **Figure 7,** which illustrates a method for encoding a code segment according to at least one embodiment of the present disclosure. The parameters of the method include a number of hidden layers N for the bidirectional neural network, an embedding dimension, and a number of cells for the neural network.

The process starts at block **710** and proceeds to block **720** where a code segment is embedded to produce a vector. The process then proceeds to block **730** to iterate through N times, once for each hidden layer.

At block **740,** the vector is processed through the neural network. Notably, the vector is updated at each iteration such that the first iteration, the vector produced at block **720** is used, and thereafter each subsequent iteration the vector produced by the previous iteration is used.

Once the vector has been run through the bidirectional neural network N times, all the vectors from each iteration are combined through a Multi-Layer Perceptron (MLP) to produce the final vector, at block **750.** The process then ends at block **760.**

Although the transformer architecture is commonly used for better performance, in this application only the encoder portion of the transformer architecture is needed to encode the script into a representative vector such that it can be searched by existing algorithms. Using the encoder and decoder architecture for comparing m seed files and n obfuscated files would take O(mnt), where t is the operation for the transformer neural network.

**Similarities Learning**

Once the lexical tokens are transformed to characteristic vectors, the cosine similarities between different vectors can be calculated. According to at least some embodiments of the present disclosure, this calculation is based on the following equation:

$$\text{cos\_sim}_{(\vec{v}_{seed}, \vec{v}_{dest})} = \frac{\vec{v}_{seed} \cdot \vec{v}_{dest}}{\|\vec{v}_{seed}\| \cdot \|\vec{v}_{dest}\|} \qquad \text{(Equation 7)}$$

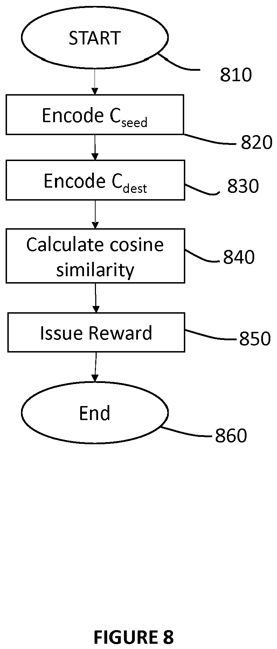

One advantage that cosine similarity provides over Euclidean distance is that the value of cosine similarity is within a range of [-1; 1], and continuous everywhere such that the machine learning model can easily calculate loss with the labels. The training process for the encoder model is described with respect to **Figure 8.** The cosine similarity is scaled to a range of [0; 1] for consistency with the labels. The binary cross entropy is used as the loss function for gradient descent.

The process of **Figure 8** is fed with training data, comprising a plurality of seed files, a plurality of destination files, and data indicating whether any two files are clones of each other or not. Each time the process of **Figure 8** is performed, a selected destination file and a selected seed file, and the knowledge of whether this pair of files are clones, are provided as inputs.

The process of **Figure 8** starts at block **810** and proceeds to block **820** where the destination file is encoded using the encoder in training. The process then proceeds to block **830** where the seed file is encoded using the encoder in training. According to at least some embodiments, the encoder in blocks **820** and **830** uses a method according to **Figure 7,** described above.

The process then proceeds to block **840** where the cosine similarity between the vectors encoded in blocks **820** and **830** is calculated. According to at least some embodiments, the cosine similarity is encoded according to **Equation 7,** above.

The cosine similarity is then used to issue a reward at block **850** and the process ends at block **860.** The reward may be based on a loss function, for example the binary cross entropy may be used as a loss function. To compute the binary cross entropy, the cosine similarity is scaled to a range of [0; 1] based on the following formula:

$$y_{scaled} = \frac{y + 1}{2} \qquad \text{(Equation 8)}$$

where y is the cosine similarity having a range of [-1; 1], and $y_{scaled}$ is the scaled cosine similarity having a range of [0; 1]. The binary cross entropy may then be computed using the following equation:

$$\mathcal{L} = -(\hat{y} \log y + (1 - \hat{y}) \log y) \qquad \text{(Equation 9)}$$

where $\hat{y}$ represents the known relationship between the two files, and y is the scaled cosine similarity.

The encoder is then updated according to the loss function, and the process of **Figure 8** may be repeated with different input files until the encoder converges.

**Identifying Malicious Software**

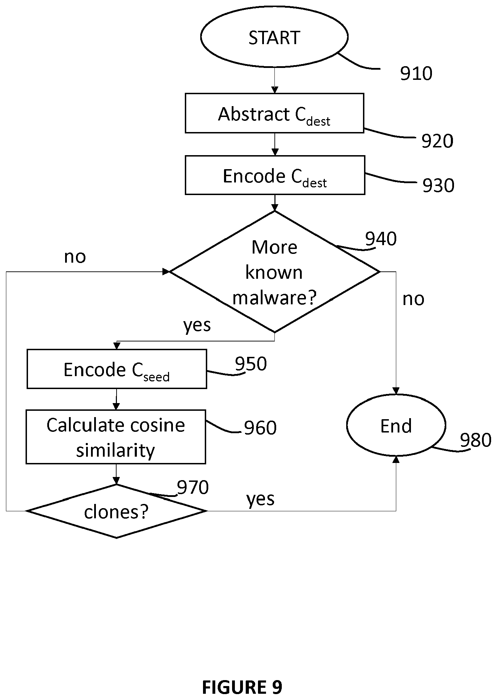

According to at least some embodiments of the present disclosure, there is provided a method for identifying malicious software, as illustrated with respect to **Figure 9.** According to at least some embodiments, the encoder used in the method of **Figure 9** operates according to the method of **Figure 7** discussed above, and has been trained according to the method of **Figure 8,** discussed above. A database comprising known malicious software files is used to test a new software file. Known malicious software files are identified as $C_{seed}$, and the new software file is identified as $C_{dest}$.

The process starts at block **910** and proceeds to block **920** where $C_{dest}$ is abstracted. As discussed above, the abstraction process is used to reduce the size of the destination file to a size that can be handled properly by the encoder. Therefore, according to some embodiments, this step may be skipped if the size of the destination file is below a threshold.

According to at least some embodiments, the abstraction model used operates according to **Figure 3** discussed above, and has been trained according to **Figure 5** discussed above. Moreover, in at least some embodiments, the abstraction model has been refined according to **Figure 6** discussed above.

The process then proceeds to block **930** where the destination file is encoded into a vector. According to at least some embodiments, the encoder used operates according to **Figure 7** discussed above and has been trained according **Figure 8** discussed above.

The process then proceeds to block **940** where a known malware file is selected from a database of known malware files. The process then proceeds to block **950** where the known malware file is encoded into a vector, using the same encoder as in block **930**.

The process then proceeds to block **960** where the cosine similarity of the vector for the destination file and the vector for the known malware file is computed. Then, based on the computed cosine similarity, it is determined whether the destination file is a clone of the known malware file or not. According to at least some embodiments, the cosine similarity is compared to a threshold value to determine whether the destination file is a clone of the known malware file.

If the two files are clones, the process ends at block **980**. An action may be taken with respect to the destination file identified as a clone of a known malware file. For example, the destination file may be discarded, or tagged as malicious software.

If the two files are not clones, the process is repeated starting at block **940**. If all known malicious software files have been compared to the destination file, the process ends at block **980**. In this case, none of the known malicious software files were found to be a clone of the destination file. An action may be taken with respect to the destination file for which no clone was found. For example, the destination file may be added to a whitelist, or tagged as safe to use. In at least some embodiments, the destination file is added to a software project.

## Example Hardware

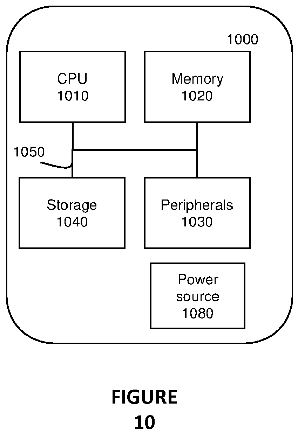

The above functionality may be implemented on any one or combination of computing devices. **Figure 10** is a block diagram of a computing device **1000** that may be used for implementing the devices and methods disclosed herein. Specific devices may utilize all of the components shown, or only a subset of the components, and levels of integration may vary from device to device. Furthermore, a device may contain multiple instances of a component, such as multiple processing units, processors, memories, etc. The computing device **1000** may comprise a central processing unit (CPU) **1010,** memory **1020,** a mass storage device **1040,** and peripherals **1030**. Peripherals **1030** may comprise, amongst others one or more input/output devices, such as a speaker, microphone, mouse, touchscreen, keypad, keyboard, printer, display, network interfaces, and the like. Communications between CPU **1010,** memory **1020,** mass storage device **1040,** and peripherals **1030** may occur through one or more buses **1050.**

The bus **1050** may be one or more of any type of several bus architectures including a memory bus or memory controller, a peripheral bus, video bus, or the like. The CPU **1010** may comprise any type of electronic data processor. The memory **1020** may comprise any type of system memory such as static random-access memory (SRAM), dynamic random access memory (DRAM), synchronous DRAM (SDRAM), read-only memory (ROM), a combination thereof, or the like. In an embodiment, the memory **1020** may include ROM for use at boot-up, and DRAM for program and data storage for use while executing programs.

The mass storage device **1040** may comprise any type of storage device configured to store data, programs, and other information and to make the data, programs, and other information accessible via the bus. The mass storage device **1040** may comprise, for example, one or more of a solid-state drive, hard disk drive, a magnetic disk drive, an optical disk drive, or the like.

The computing device **1000** may also include one or more network interfaces (not shown), which may comprise wired links, such as an Ethernet cable or the like, and/or wireless links to access nodes or different networks. The network interface allows the processing unit to communicate with remote units via the networks. For example, the network interface may provide wireless communication via one or more transmitters/transmit antennas and one or more receivers/receive antennas. In an embodiment, the processing unit is coupled to a local-area network or a wide-area network, for data processing and communications with remote devices, such as other processing units, the Internet, remote storage facilities, or the like.

Through the descriptions of the preceding embodiments, the teachings of the present disclosure may be implemented by using hardware only or by using a combination of software and hardware. Software or other computer executable instructions for implementing one or more embodiments, or one or more portions thereof, may be stored on any suitable computer readable storage medium. The computer readable storage medium may be a tangible or in transitory/non-transitory medium such as optical (e.g., CD, DVD, Blu-Ray, etc.), magnetic, hard disk, volatile or non-volatile, solid state, or any other type of storage medium known in the art.

**Experiments**

To test the above, a new test dataset was generated by collecting JavaScript files from open-source repositories, including a baseline that is commonly used in literature to support long sequence data. Details of the experiments and results are provided in Appendix A: *Leo Song, Steven Ding, Yuan Tian, Li Tao Li, Weihan Ou, Philippe Charland, Andrew Walenstein, Cybertron: Towards a Robust JavaScript Clone Search System against Code Obfuscation through Reinforcement Subsequence Learning.*

**Claims**

1. A method at a computing device for identifying malicious software, comprising:

   a) encoding a first software file using an encoder model to create a first encoded vector;
   b) selecting a malware file from a database of malware files;
   c) encoding the malware file using the encoder model to create a second encoded vector;
   d) computing a cosine similarity between the first encoded vector and the second encoded vector; and
   e) determining whether the first software file is a clone of the malware file based on the cosine similarity.

2. The method of claim 1, further comprising:

   repeating steps b), c), d), and e), with each file from the database; or
   wherein step e) compares the cosine similarity to a threshold value.

3. The method of claim 2, further comprising:

   when none of the files from the database are determined to be the clone of the first software file, tagging the first software file as safe; or
   when at least one of the files from the database is determined to be the clone of the first software file, tagging the first software file as unsafe.

4. The method of claim 1, wherein the cosine similarity is computed based on

$$\mathrm{cos\_sim}_{(\vec{v}_{seed}, \vec{v}_{dest})} = \frac{\vec{v}_{seed} \cdot \vec{v}_{dest}}{\|\vec{v}_{seed}\| \cdot \|\vec{v}_{dest}\|}$$

   where cos_sim represents the cosine similarity, $\vec{v}_{dest}$ represents the first encoded vector, and $\vec{v}_{seed}$ represents the second encoded vector.

5. The method of claim 1, further comprising, prior to step a), abstracting the first software file using an abstraction model.

6. The method of claim 1, wherein the encoder model is trained with training data, the training data comprising a plurality of destination files, a plurality of seed files, and indications of which of the destination files are clones of which of the seed files.

7. The method of claim 5, wherein the abstraction model is trained with training data, the training data comprising a plurality of destination files, a plurality of seed files, and indications of which of the destination files are clones of which of the seed files.

8. A computing device for identifying malicious software, comprising:

   a processor; and
   memory; wherein the processor and the memory cooperate to:

a) encode a first software file using an encoder model to create a first encoded vector;
b) select a malware file from a database of malware files;
c) encode the malware file using the encoder model to create a second encoded vector;
d) compute a cosine similarity between the first encoded vector and the second encoded vector; and
e) determine whether the first software file is a clone of the malware file based on the cosine similarity.

9. The computing device of claim 8, wherein the processor and the memory further cooperate to:

repeat steps b), c), d), and e), with each file from the database; or
wherein step e) compares the cosine similarity to a threshold value.

10. The computing device of claim 9, wherein the processor and the memory further cooperate to:

when none of the files from the database are determined to be the clone of the first software file, tag the first software file as safe; or
when at least one of the files from the database is determined to be the clone of the first software file, tag the first software file as unsafe.

11. The computing device of claim 8, wherein the cosine similarity is computed based on

$$\cos\_sim_{(\vec{v}_{seed},\vec{v}_{dest})} = \frac{\vec{v}_{seed} \cdot \vec{v}_{dest}}{\|\vec{v}_{seed}\| \cdot \|\vec{v}_{dest}\|}$$

where cos_sim represents the cosine similarity, $\vec{v}_{dest}$ represents the first encoded vector, and $\vec{v}_{seed}$ represents the second encoded vector.

12. The computing device of claim 10, wherein the processor and the memory further cooperate to, prior to step a), abstract he first software file using an abstraction model.

13. The computing device of claim 8, wherein the encoder model is trained with training data, the training data comprising a plurality of destination files, a plurality of seed files, and indications of which of the destination files are clones of which of the seed files.

14. The computing device of claim 12, wherein the abstraction model is trained with training data, the training data comprising a plurality of destination files, a plurality of seed files, and indications of which of the destination files are clones of which of the seed files.

15. A computer readable medium having stored thereon executable code for execution by a processor of a computing device, the executable code comprising instructions for:

a) encoding a first software file using an encoder model to create a first encoded vector;
b) selecting a malware file from a database of malware files;
c) encoding the malware file using the encoder model to create a second encoded vector;
d) computing a cosine similarity between the first encoded vector and the second encoded vector; and
e) determining whether the first software file is a clone of the malware file based on the cosine similarity.

**FIGURE 1**

EP 4 357 952 A1

**FIGURE 2**

START — 310

Conv1D — 320

i = t? — 330

No

Calculate probabilities — 340

Find token A with highest probability — 350

Select token A and subsequent *len* tokens — 360

Yes

Re-combine selected tokens — 370

END — 380

**FIGURE 3**

Series 1

FIGURE 4

**FIGURE 5**

EP 4 357 952 A1

**FIGURE 6**

**FIGURE 7**

START — 810

Encode $C_{seed}$ — 820

Encode $C_{dest}$ — 830

Calculate cosine similarity — 840

Issue Reward — 850

End — 860

**FIGURE 8**

START — 910

Abstract $C_{dest}$ — 920

Encode $C_{dest}$ — 930

940
More known malware?

no

yes

no

Encode $C_{seed}$ — 950

Calculate cosine similarity — 960

970
clones?

yes

End — 980

**FIGURE 9**

**FIGURE
10**

Europäisches
Patentamt

European
Patent Office

Office européen
des brevets

# EUROPEAN SEARCH REPORT

Application Number

EP 23 20 3635

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MILES Q LI ET AL: "I-MAD: A Novel Interpretable Malware Detector Using Hierarchical Transformer", ARXIV.ORG, CORNELL UNIVERSITY LIBRARY, 201 OLIN LIBRARY CORNELL UNIVERSITY ITHACA, NY 14853, 15 September 2019 (2019-09-15), XP081477588, * abstract * * pages 1-11 * * tables 1-6 * * figures 1-6 * | 1-15 | INV. G06F21/55 H04L9/40 H04W12/12 G06N3/02 G06N3/04 G06N3/08 |
| X | ABHISHEK KARNIK ET AL: "Detecting Obfuscated Viruses Using Cosine Similarity Analysis", MODELLING & SIMULATION, 2007. AMS '07. FIRST ASIA INTERNATIONAL CONFERENCE ON, IEEE, PI, 1 March 2007 (2007-03-01), pages 165-170, XP031073704, ISBN: 978-0-7695-2845-8 * abstract * * pages 1-6 * * tables 1-2 * * figures 1-2 * | 1-15 | |
| A | US 2020/120110 A1 (STOKES III JACK WILSON [US] ET AL) 16 April 2020 (2020-04-16) * figures 1-8 * * paragraphs [0001] - [0011] * * paragraphs [0026] - [0045] * * paragraphs [0057] - [0093] * * claims 1-20 * | 1-15 | TECHNICAL FIELDS SEARCHED (IPC) G06F H04L H04W G06N |

-/--

The present search report has been drawn up for all claims

| Place of search | Date of completion of the search | Examiner |
|---|---|---|
| Munich | 1 February 2024 | Erdene-Ochir, O |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

**EP 23 20 3635**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CN 112 559 978 A (UNIV BEIJING POSTS & TELECOMM) 26 March 2021 (2021-03-26)<br>* figures 1-6 *<br>* paragraphs [0001] – [0024] *<br>* paragraphs [0033] – [0110] *<br>* claims 1-10 *<br>----- | 1-15 | |

TECHNICAL FIELDS
SEARCHED (IPC)

The present search report has been drawn up for all claims

| Place of search | Date of completion of the search | Examiner |
|---|---|---|
| Munich | 1 February 2024 | Erdene-Ochir, O |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.............................................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 23 20 3635

This annex lists the patent family members relating to the patent documents cited in the above-mentioned European search report.
The members are as contained in the European Patent Office EDP file on
The European Patent Office is in no way liable for these particulars which are merely given for the purpose of information.

01-02-2024

| Patent document cited in search report | | Publication date | Patent family member(s) | | Publication date |
|---|---|---|---|---|---|
| US 2020120110 | A1 | 16-04-2020 | EP | 3847587 A1 | 14-07-2021 |
| | | | US | 2020120110 A1 | 16-04-2020 |
| | | | WO | 2020081256 A1 | 23-04-2020 |
| CN 112559978 | A | 26-03-2021 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **S. H. DING ; B. C. FUNG ; P. CHARLAND.** Kam1n0: Mapreduce-based assembly clone search for reverse engineering,. *Proceedings of the 22nd ACM SIGKDD International Conference on Knowledge Discovery and Data Mining,* 2016, 461-470
- Asm2vec: Boosting static representation robustness for binary clone search against code obfuscation and compiler optimization. **S. H. DING ; B. C. FUNG ; P. CHARLAND.** IEEE Symposium on Security and Privacy (SP). IEEE, 2019, 472-489
- Deckard: Scalable and accurate tree-based detection of code clones. **JIANG ; G. MISHERGHI ; Z. SU ; S. GLONDU.** 29th International Conference on Software Engineering (ICSE'07). IEEE, 2007, 96-105
- **S. NDICHU ; S. KIM ; S. OZAWA ; T. MISU ; K. MAKISHIMA.** A machine learning approach to detection of javascript-based attacks using ast features and paragraph vectors,. *Applied Soft Computing,* 2019, vol. 84, 105721
- **H. SAJNANI, ; V. SAINI ; J. SVAJLENKO ; C. K. ROY ; C. V. LOPES.** Sourcerercc: Scaling code clone detection to big-code. *Proceedings of the 38th International Conference on Software Engineering,* 2016, 1157-1168
- **A. PASS ; M. BACKES ; B. STOCK.** Hidenoseek: Camouflaging malicious javascript in benign asts. *Proceedings of the 2019 ACM SIGSAC Conference on Computer and Communications Security,* 2019, 1899-1913

- **A. KULKARNI ; R. METTA ; A CODE OBFUSCATION FRAMEWORK USING CODE CLONES.** *Proceedings of the 22nd International Conference on Program Comprehension,* 2014, 295-299
- A new code obfuscation scheme for software protection. **A. KULKARNI ; R. METTA.** 2014 IEEE 8th International Symposium on Service Oriented System Engineering. IEEE, 2014, 409-414
- **T. LASZLO ; A . KISS.** Obfuscating c++ programs via control flow flattening. *Annales Universitatis Scientarum Budapestinensis de RolandoEotvos Nominatae, Sectio Computatorica,* 2009, vol. 30 (1), 3-19
- **S. NDICHU, ; S. KIM ; S. OZAWA ; T. MISU ; K. MAKISHIMA.** A machine learning approach to detection of javascript-based attacks using ast features and paragraph vectors,. *Applied Soft Computing,* 2019, vol. 84, 105721
- Obfuscated malicious javascript detection using classification techniques,. **P. LIKARISH ; E. JUNG ; I. JO.** 2009 4th International Conference on Malicious and Unwanted Software (MAL WARE). IEEE, 2009, 47-54
- **C. COLLBERG ; C. THOMBORSON ; D. LOW.** A taxonomy of obfuscating transformations. *Technical report, Citeseer,* 1997
- **T. VAN ERVEN ; P. HARREMOS.** Renyi divergence and kullback-leibler divergence. *IEEE Transactions on Information Theory,* 2014, vol. 60 (7), 3797-3820